# EUROPEAN PATENT SPECIFICATION

(11) **EP 3 756 444 B1**
(45) Date of publication and mention of the grant of the patent: **23.03.2022**
(21) Application number: 19182988.6
(22) Date of filing: 27.06.2019
(51) Int. Cl.: A01D 61/00, A01D 57/02

(54) **COMBINE HEADER COMPRISING A TRANSPORT AUGER SUPPORTED IN AN OUT-OF-CENTER POSITION**
MÄHDRESCHERVORSATZ MIT EINER TRANSPORTSCHNECKE, DIE IN EINER AUSSERMITTIGEN POSITION GELAGERT IST
MOISSONNEUSE-BATTEUSE COMPRENANT UNE VIS SANS FIN DE TRANSPORT SOUTENUE DANS UNE POSITION HORS CENTRE

(43) Date of publication of application: 30.12.2020
(73) Proprietor: CNH Industrial Belgium N.V., 8210 Zedelgem (BE)
(72) Inventor: van Vooren, Sandor, 8340 Sijsele-Damme (BE); Ysebaert, Maarten, 8700 Tielt (BE); Vandergucht, Yvan C.C., 8647 Lo-Reninge (BE); Lagaese, Niko, 8000 Brugge (BE); Borry, Stijn, 8740 Pittem (BE)
(74) Representative: CNH Industrial IP Department

(56) References cited:
- EP-A1- 2 446 729
- WO-A1-2016/092061
- CH-A- 363 938
- US-A- 6 125 620
- US-A1- 2014 075 906

## Description

### Field of the Invention

The present invention is related to self-propelled agricultural machines such as combine harvesters, comprising a header equipped with a rotating auger mechanism.

### State of the art.

Agricultural combine harvesters are machines designed for harvesting and processing crops such as wheat or corn. Crops are cut from the field on a wide area by the header mounted at the front of the combine. The harvested material is brought to a central area of the header, and from there it is transported by the feeder to a threshing mechanism comprising laterally or longitudinally mounted threshing rotors and further to the cleaning section comprising a number of sieves where grains are separated from any remaining crop residue.

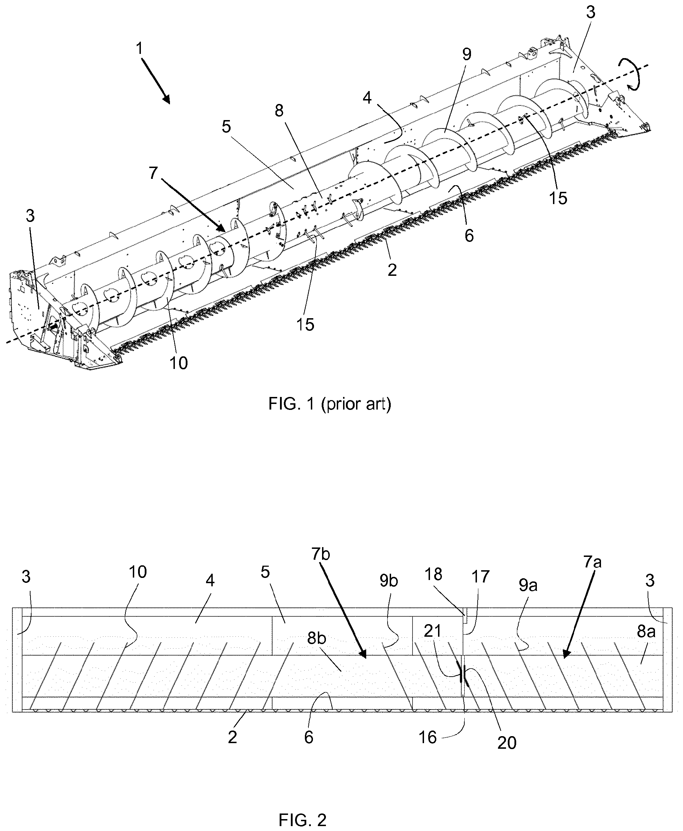

The mechanism used in the header for transporting the harvested material to the central area may be a rotating auger (i.e. a screw conveyor) or a belt conveyor. Figure 1 shows a header 1 as known in the art, provided with an auger-based mechanism. The header comprises a cutter bar 2 mounted between the two side walls 3 of the header, a back wall 4 that includes an entry port 5 towards the feeder of the combine (not shown), and a header floor 6. The rotatable auger 7 comprises a cylindrical tube 8 extending essentially along the full width of the header and provided with two oppositely wound helicoidal flights 9 and 10 on either side of the central area. When the auger rotates in the direction indicated by the arrow, the helicoidal flights push the crops which have been cut by the cutterbar 2, towards the centre. The auger 7 is additionally provided with auger fingers 15 configured to support the crops during their movement along the auger's longitudinal direction. The fingers 15 are operated by a crank mechanism mounted inside the tube 8. The auger 7 is rotatably supported at its outer ends by suitable bearings in the sidewalls 3 of the header, and coupled to a drive mechanism (not shown) for driving the auger's rotation.

To increase the yield of each harvest run, larger and more powerful combine harvesters are being built, which support headers of increasing widths. However this evolution brings with it a number of mechanical challenges. One aspect is the fact that the auger can no longer be supported only at its outer extremities, as the weight of the auger causes bending of the auger tube. A known solution to this problem is to support the auger in a third support location, in the center of the header. This solution is illustrated for example in document US-A-3977164. The auger tube is formed of two equal halves provided with facing end flanges which are bolted together. The thus assembled flanges are rotatable with respect to a central plate that is attached to the back wall of the header via a support bracket.

Even though the central support solves the mechanical problem related to bending of the auger under its own weight, the central position of the support bracket is nevertheless problematic as it forms an obstruction to the crop flow towards the feeder.

Patent publication document US2014/075906 is related to an auger conveyor for a row crop harvesting head that has a hinged frame. The auger conveyor has a first section that is coupled to a second section with a universal joint, and with helicoidal flight portions on both sides of the joint arranged to convey crops across the position of the joint. According to an embodiment, a guide element is provided on the upstream side of a coupling plate that supports the auger adjacent to the universal joint position.

Patent publication document WO2016/092061 is related to an agricultural harvester including a chassis, a header for cutting and gathering crop material, the header being carried by the chassis, and an auger. The auger has a plurality of auger sections. The auger includes an auger crankshaft and a hingeable coupling for coupling two of the auger sections to each other. The hingeable coupling allows the auger sections to rotate about differing axes.

### Summary of the invention

The invention is related to a header for a combine harvester and to a combine harvester, in accordance with the appended claims. The header comprises an auger for transporting harvested crops from the sides of the header to the centre. The auger is rotatably supported at the location of the sidewalls of the header, and comprises a first and second helicoidal flight on either side of the header's centre. In a header according to the invention, the auger is rotatably supported at at least one additional, out-of-centre location of the header. For this purpose, the auger is split into at least two parts, coupled together and rotatably supported at the out-of-centre location. One of the helicoidal flights is equally split in a flight portion upstream of the coupling and a flight portion downstream of the coupling. The upstream and downstream flight portions are provided with guide elements arranged between the respective extremities of the flight portions and the coupling. The guide elements facilitate the smooth transition of harvested crops from the upstream side of the coupling to the downstream side. The guide elements are first and second guide plates fixed to or at least partially uniform with the first and second flight portions.

### Brief description of the figures

Figure 1 is an image of a combine header known in the art.
Figure 2 is a conceptual frontal view of a header according to an embodiment of the invention.
Figures 3a to 3c show details of the guide plates provided on the auger of a combine header according to an embodiment of the invention.

### Detailed description of preferred embodiments of the invention

Preferred embodiments will now be described with reference to the drawings. The detailed description is not limiting the scope of the invention, which is defined only by the appended claims.

As seen in Figure 2, a number of components of a header according to the invention are the same as in the prior art header of figure 1 : the sidewalls 3, the back wall 4 with the central opening 5, the header floor 6 and cutterbar 2. Contrary to the prior art however, the auger 7 in the header of Figure 2 is a split auger, comprising two parts 7a and 7b, which are coupled together in an out-of-center support location of the header width. In the embodiment shown, the support location is situated to the right of the centre of the header width, as seen from the front of the header. One auger part 7a is thus shorter than the other part 7b. The shorter auger part 7a comprises a first tube part 8a and a first portion 9a of a helicoidal flight 9 configured to transport crops from the right-hand side of the header to the center. The longer auger part 7b comprises a second tube part 8b of the same diameter as the first tube 8a, and a second portion 9b of the right-to-left helicoidal flight 9, as well as a complete left-to-right helicoidal flight 10, i.e. configured to transport crops from the left-hand side of the header to the center. As in the prior art, the header of Figure 2 is preferably provided with auger fingers 15 as shown in Figure 1, but these auger fingers are not shown in Figure 2 for the sake of simplicity of the drawing. The auger fingers in a header according to the invention may operate in the same way as in the prior art header.

The tube parts 8a and 8b are fixed together and the assembly of these tube parts is rotatably supported by a coupling plate 16 and a support bracket 17. The support bracket 17 is itself fixed to the back wall 4 of the header by a suitable fixation 18. The assembly of the two tube parts 8a and 8b, and the manner in which this assembly is rotatable with respect to the coupling plate 16 may be realised in accordance with any known system for supporting a split auger in a central position, for example in accordance with the mechanism shown in US-A-3977164. Also, the bracket 17 and the fixation 18 may be realised in any manner that is suitable for realising a strong connection to the back wall 4.

The invention is related in particular to the transition between the helicoidal flight portions 9a and 9b on either side of the auger split location. According to the invention, these helicoidal flight portions 9a and 9b are provided on either side of the coupling plate 16 with guide elements 20 and 21, which are fixed to the ends of the flight portions 9a and 9b. The guide elements are configured to realize a smooth transition of the crop movement across the location of coupling plate 16 and the bracket 17.

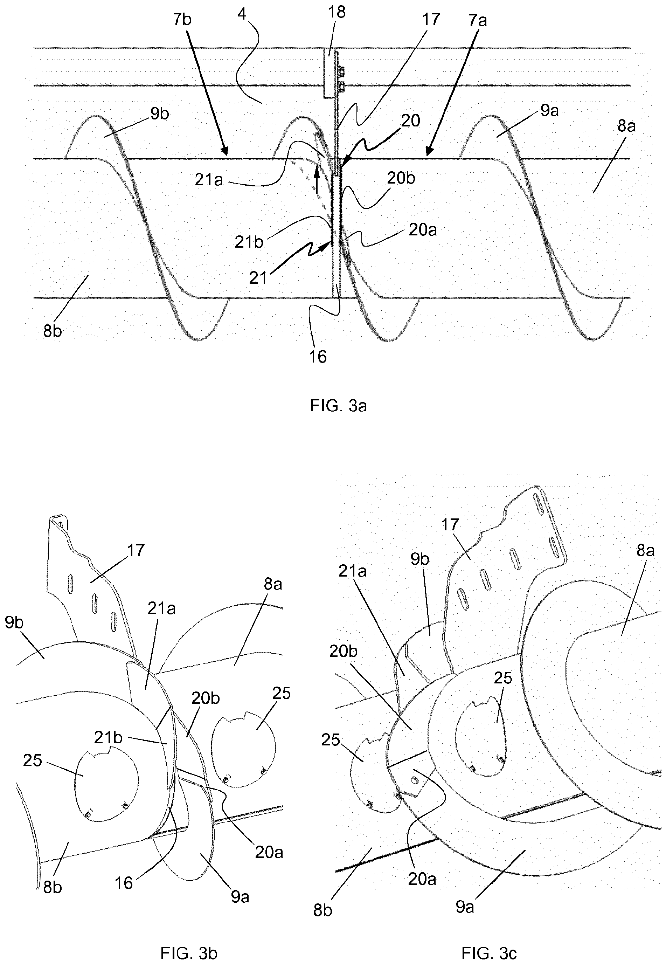

A preferred embodiment of the guide elements is shown in more detail in Figures 3a to 3c. The support bracket 17 is a plate-shaped element bolted to a fixation element 18 that is itself fixed to the back wall 4 of the header by a suitable fixation means not shown in detail. The coupling plate 16, the tube parts 8a and 8b and the flight portions 9a and 9b are indicated. On the upstream side of the coupling plate 16, a first guide-plate 20 is welded to the end of the upstream helicoidal flight portion 9a and to the outer surface of the upstream tube part 8a. The up-stream guide plate 20 comprises a first portion 20a that lengthens the helicoidal flight portion 9a towards the end face of the tube part 8a, and a second portion 20b that is parallel to the coupling plate 16. The down-stream guide plate 21 is welded to the downstream tube part 8b and also comprises a first portion 21a that is welded to and lengthens the down-stream helicoidal flight portion 9b, and a second portion 21b that is parallel to the coupling plate 16. The portions 20b and 21b overlap each other along the circumference of the auger tube consisting of the assembled tube parts 8a and 8b. The portions 20a and 21a which lengthen the flight portions 9a and 9b may have the same height (measured from the surface of the tube parts 8a and 8b) as the flight portions 9a and 9b or a height that is different therefrom, for example the height of the portions 20a and 21a may gradually decrease from the height of the flight portions 9a and 9b to a smaller height at the start of the second portions 20b and 21b.

The upstream guide plate 20 inhibits the crop from moving in the opposite direction when it reaches the gap between the two flight portions 9a and 9b. The downstream guide plate 21 picks up the crop maintained by the upstream plate 20. Shown only in the 3D images in Figures 3b and 3c, the tube parts 8a and 8b preferably comprise openings closed by removable covers 25, for providing access to the coupling and the bearings which support the split auger tube at the location of the support bracket 17.

Advantageously and as shown in the 3D view in Figure 3b, the second portion 21b of the downstream plate 21 becomes more narrow as it extends from the first portion 21a towards the downstream tube part 8b. Preferably the narrowing portion 21b ends in a pointed end, as shown in the drawings. This pointed end facilitates the insertion of the downstream guide plate 21 into the crop material, and avoids crop becoming stuck to the edge of the guide plate 21. According to the preferred embodiment shown in the drawings, the portion 20b of the upstream guide plate is also formed as a narrowing plate ending in a pointed end. The upstream and downstream plates 20 and 21 do not need to be equal in size. As seen in the drawings the portions 20a and 21a of the guide plates have different dimensions, as do the portions 20b and 21b. The optimal shape and dimensions of the guide plates may vary according to the dimensions and shape of the auger and the auger flights. The transition between the first and second portion (e.g. 20a and 20b) of each guide plate could be a more gradual transition for example.

In the embodiment of Figures 3a-3c, it is seen furthermore that the downstream helicoidal flight portion 9b is shifted with respect to the upstream flight portion 9a. The dotted line drawn in Figure 3a shows the continuation of the intersection of the upstream flight portion 9a and the upstream tube part 8a. The shift is indicated by the arrow from the dotted line towards the downstream flight portion 9b. This shift realises a time lag in the operation of the downstream flight portion 9b relative to the upstream flight portion 9a, which is beneficial for obtaining a smooth transition of the crop movement. The shift allows more time for the crops to pass the area of the coupling plate 16 before being entrained by the downstream guide plate 21. The shift is advantageous and preferred, but even without this shift, the guide plates 20 and 21 are effective in properly guiding the crops. The invention therefore covers both embodiments, with or without the above-described shift.

According to the invention, the guide plates 20 and 21 may be welded or bolted to the flight portions 9a and 9b. Alternatively, the portions 20a and 21a which lengthen the flight portions 9a and 9b may be uniform with said flight portions, and the second portions 20b and 21b are welded or bolted to the ends of the portions 20a and 21b. Or according to a further alternative, the entire guide plates, i.e. portions 20a and 20b on one side of the auger split and 21a and 21b on the other side, may be uniform with the flight portions 9a and 9b. This may be achieved by producing the flight portions 9a and 9b as two continuous flights, and by cutting and deforming the ends of the flights so that these ends obtain the shape of the guide plates 20 and 21. Another way of producing guide plates uniform with the flight portions 9a and 9b is to produce these flight portions as an assembly of multiple turns or half turns welded end to end (as is known in the art) onto the outer surface of the auger tube parts 8a and 8b, and to shape the two half-turns which are to be placed on either side of the auger split location by stamping and/or cutting, prior to welding these half turns to the auger tube.

The auger split may be located on the opposite side of the auger 7, dividing the helicoidal flight 10 instead of the flight 9, or a split may be present on both sides of the auger. According to an advantageous embodiment, the split auger according to the invention is combined with a reel that is also split in an out-of-centre position, that is however different from the out-of-center position of the auger split.

## Claims

1. A header for a combine harvester comprising a pair of side walls (3), a back wall (4), a header floor (6), and a rotatable auger (7) for transporting harvested crop material towards a central area of the header, the auger (7) comprising a tube (8) provided with a first and second helicoidal flight (9,10) arranged on either side of the central area, the tube (8) being rotatably supported at the location of the side walls (3), wherein :
- the auger tube is formed of at least two tube parts (8a,8b) which are assembled together by a coupling that is itself rotatably supported by a coupling plate (16) fixed to the back wall (4) and located in an out-of-center position of the header,
- one of the helicoidal flights is split between a flight portion (9a) on the upstream side of the coupling plate (16) and a flight portion (9b) on the downstream side of the coupling plate (16),
**characterised in that** :
- the upstream and downstream flight portions (9a,9b) are provided with guide elements (20,21) arranged between the respective extremities of the flight portions (9a,9b) and the coupling plate (16), the guide elements being configured to facilitate the transition of the crop transport from the upstream side of the coupling plate (16) to the downstream side,
- the guide elements are first and second guide plates (20,21) fixed to or at least partially uniform with the first and second flight portions (9a,9b).

2. The header according to claim 1, wherein the downstream flight portion (9b) is shifted with respect to the upstream flight portion (9a), so as to lag behind the upstream flight portion (9a) when the auger (7) is rotating.

3. The header according to claim 1, wherein each guide plate comprises a first portion (20a,21a) that lengthens the respective flight portion (9a,9b) towards the coupling plate (16), and a second portion (20b,21b) that is a flat plate element extending parallel to the coupling plate (16).

4. The header according to claim 3, wherein the second portion (21b) of at least the downstream guide plate (21) has a section that becomes narrower as the second portion extends outward from the first portion (21a) of the guide plate.

5. The header according to claim 4, wherein the second portions (20b,21b) of both guide plates (20,21) have a section that becomes narrower as the respective second portion (20b,21b) extends outward from the first portion (20a,21a) of the respective guide plate.

6. The header according to claim 4, wherein at least the second portion (21b) of the downstream guide plate (21) has a pointed end.

7. The header according to claim 6, wherein the second portions (20b,21b) of the both guide plates (20,21) have a pointed end.

8. The header according to any one of claims 1 to 7, wherein the guide plates (20,21) are welded or bolted to the upstream and downstream flight portions (9a,9b).

9. The header according to any one of claims 1 to 7, wherein at least the first portion (20a, 21a) of the first and second guide plate (20,21) is uniform with the respective first and second flight portion (9a,9b).

10. A header according to any one of the preceding claims, comprising a reel, and wherein the reel comprises at least a first and a second part which are assembled together by a reel coupling, and wherein the reel coupling is in an out-of-center location of the header, that is different from the out-of-center location of the auger coupling.

11. A combine harvester comprising a header in accordance with any one of the preceding claims.

## Patentansprüche

1. Vorsatz für einen Mähdrescher mit einem Paar von Seitenwänden (3), einer Rückwand (4), einem Vorsatzboden (6) und einer drehbaren Förderschnecke (7) zum Transportieren von geerntetem Erntegut in einen Mittelbereich des Vorsatzes, wobei die Förderschnecke (7) ein Rohr (8) aufweist, das mit einem ersten und einem zweiten schraubenförmigen Gewindegang (9, 10) auf beiden Seiten des Mittelbereichs versehen ist, wobei das Rohr (8) drehbar an dem Ort der Seitenwände (3) gelagert ist, wobei:
- das Förderschneckenrohr aus mindestens zwei Rohrbestandteilen (8a, 8b) gebildet ist, die durch eine Kupplung aneinandergefügt sind, die selbst drehbar durch eine Kupplungsplatte (16) gelagert ist, die an der Rückwand (4) befestigt ist und die in einer außermittigen Position des Vorsatzes angeordnet ist,
- einer der schraubenförmigen Gewindegänge aufgeteilt ist zwischen einem Gewindegangabschnitt (9a) auf der stromauf gelegenen Seite der Kupplungsplatte (16) und einem Gewindegangabschnitt (9b) auf der stromab gelegenen Seite der Kupplungsplatte (16),
**dadurch gekennzeichnet, dass**:
- die stromauf und stromab gelegenen Gewindegangabschnitte (9a, 9b) mit Führungselementen (20, 21) versehen sind, die zwischen den entsprechenden Extremitäten der Gewindegangabschnitte (9a, 9b) und der Kupplungsplatte (16) angeordnet sind, wobei die Führungselemente dazu eingerichtet sind, um den Übergang des Ernteguttransports von der stromauf gelegenen Seite der Kupplungsplatte (16) zu der stromab gelegenen Seite zu erleichtern,
- die Führungselemente erste und zweite Führungsplatten (20, 21) sind, die an den ersten und zweiten Gewindegangabschnitten (9a, 9b) befestigt oder zumindest teilweise gleichförmig damit sind.

2. Vorsatz nach Anspruch 1, wobei der stromab gelegene Gewindegangabschnitt (9b) bezüglich des stromauf gelegenen Gewindegangabschnitts (9a) verschoben ist, um dem stromauf gelegenen Gewindeabschnitt (9a) nachzulaufen, wenn die Förderschnecke (7) sich dreht.

3. Vorsatz nach Anspruch 1, wobei jede Führungsplatte einen ersten Abschnitt (20a, 21a), der den entsprechenden Gewindegangabschnitt (9a, 9b) zu der Kupplungsplatte (16) hin verlängert, und einen zweiten Abschnitt (20b, 21b) aufweist, der ein flaches Plattenelement ist, das sich parallel zu der Kupplungsplatte (16) erstreckt.

4. Vorsatz nach Anspruch 3, wobei der zweite Abschnitt (21b) von zumindest der stromab gelegenen Führungsplatte (21) einen Abschnitt aufweist, der schmaler wird, wenn sich der zweite Abschnitt von dem ersten Abschnitt (21a) der Führungsplatte nach außen erstreckt.

5. Vorsatz nach Anspruch 4, wobei die zweiten Abschnitte (20b, 21b) von beiden Führungsplatten (20, 21) einen Abschnitt aufweisen, der schmaler wird, wenn sich der entsprechende zweite Abschnitt (20b, 21b) von dem ersten Abschnitt (20a, 21a) der entsprechenden Führungsplatte nach außen erstreckt.

6. Vorsatz nach Anspruch 4, wobei zumindest der zweite Abschnitt (21b) der stromab gelegenen Führungsplatte (21) ein spitz zulaufendes Ende aufweist.

7. Vorsatz nach Anspruch 6, wobei die zweiten Abschnitte (20b, 21b) von beiden Führungsplatten (20, 21) ein spitz zulaufendes Ende aufweisen.

8. Vorsatz nach einem der Ansprüche 1 bis 7, wobei die Führungsplatten (20, 21) auf die stromauf und stromab gelegenen Gewindegangabschnitte (9a, 9b) geschweißt oder geschraubt sind.

9. Vorsatz nach einem der Ansprüche 1 bis 7, wobei zumindest der erste Abschnitt (20a, 21a) der ersten und der zweiten Führungsplatten (20, 21) gleichförmig mit dem entsprechenden ersten und zweiten Gewindegangabschnitt (9a, 9b) ist.

10. Vorsatz nach einem der vorhergehenden Ansprüche, der eine Haspel aufweist, und wobei die Haspel mindestens einen ersten und einen zweiten Teil aufweist, die durch eine Haspelkupplung aneinandergefügt sind, und wobei die Haspelkupplung an einer außermittigen Position des Vorsatzes angeordnet ist, die sich von der außermittigen Position der Förderschneckenkupplung unterscheidet.

11. Mähdrescher mit einem Vorsatz nach einem der vorhergehenden Ansprüche.

## Revendications

1. Tête pour moissonneuse-batteuse comprenant une paire de parois latérales (3), une paroi arrière (4), un fond de tête (6), et une tarière rotative (7) pour transporter le matériau de récolte vers une zone centrale de la tête, la tarière (7) comprenant un tube (8) doté d'une première et d'une deuxième volée hélicoïdale (9, 10) disposées sur chaque côté de la zone centrale, le tube (8) étant soutenu de manière rotative à l'emplacement des parois latérales (3), dans laquelle :
- le tube de tarière se compose d'au moins deux parties de tube (8a, 8b), lesquelles sont assemblées par un accouplement qui est à son tour soutenu de manière rotative par une plaque d'accouplement (16) fixée à la paroi arrière (4) et située excentriquement par rapport à la tête,
- l'une des volées hélicoïdales est subdivisée entre une partie de volée (9a) sur le côté en amont de la plaque d'accouplement (16) et une partie de volée (9b) sur le côté en aval de la plaque d'accouplement (16),
**caractérisée en ce que** :
- les parties de volée en amont et en aval (9a, 9b) sont dotées d'éléments de guidage (20, 21) disposés entre les extrémités respectives des parties de volée (9a, 9b) et la plaque d'accouplement (16), les éléments de guidage étant agencés pour faciliter la transition du transport de la récolte du côté en amont de la plaque d'accouplement (16) vers le côté en aval,
- les éléments de guidage sont des première et deuxième plaques de guidage (20, 21) fixées à ou au moins partiellement uniformes avec les première et deuxième parties de volée (9a, 9b).

2. Tête selon la revendication 1, dans laquelle la partie de volée en aval (9b) est décalée par rapport à la partie de volée en amont (9a), de manière à se trouver en arrière de la partie de volée en amont lorsque la tarière (7) est en rotation.

3. Tête selon la revendication 1, dans laquelle chaque plaque de guidage comprend une première partie (20a, 21a) qui prolonge la partie de volée respective (9a, 9b) vers la plaque d'accouplement (16), et une deuxième partie (20b, 21b) qui est un élément de plaque plat qui s'étend parallèlement à la plaque d'accouplement (16).

4. Tête selon la revendication 3, dans laquelle la deuxième partie (21b) au moins de la plaque de guidage en aval (21) a une partie qui rétrécit lorsque la deuxième partie s'étend vers l'extérieur à partir de la première partie (21a) de la plaque de guidage.

5. Tête selon la revendication 4, dans laquelle les deuxièmes parties (20b, 21b) des deux plaques de guidage (20,21) ont une partie qui rétrécit lorsque la deuxième partie respective (20b, 21b) s'étend vers l'extérieur à partir de la première partie (20a, 21a) de la plaque de guidage respective.

6. Tête selon la revendication 4, dans laquelle au moins la deuxième partie (21b) de la plaque de guidage en aval (21) a une extrémité pointue.

7. Tête selon la revendication 6, dans laquelle les deuxièmes parties (20b, 21b) des deux plaques de guidage (20, 21) ont une extrémité pointue.

8. Tête selon l'une quelconque des revendications 1 à 7, dans laquelle les plaques de guidage (20, 21) sont soudées ou boulonnées aux parties (9a, 9b) de volée en amont et en aval.

9. Tête selon l'une quelconque des revendications 1 à 7, dans laquelle au moins la première partie (20a, 21a) de la première et de la deuxième plaque de guidage (20, 21) est uniforme par rapport à la première et à la deuxième partie de volée (9a, 9b).

10. Tête selon l'une quelconque des revendications précédentes, comprenant une bobine, et dans laquelle la bobine comprend au moins une première et une deuxième parties assemblées par un couplage de bobine, et dans laquelle le couplage de bobine se trouve à un endroit décentralisé par rapport à la tête, différent de l'endroit décentralisé du couplage de la tarière.

11. Moissonneuse-batteuse comprenant une tête selon l'une quelconque des revendications précédentes.
